(19) Europäisches Patentamt
European Patent Office
Office européen des brevets

(11) EP 2 407 436 A1

(12) EUROPEAN PATENT APPLICATION

(43) Date of publication:
18.01.2012 Bulletin 2012/03

(51) Int Cl.:
*C03B 37/027* (2006.01)    *G02B 6/036* (2006.01)

(21) Application number: 11173703.7

(22) Date of filing: 12.07.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 15.07.2010 JP 2010160966

(71) Applicant: Sumitomo Electric Industries, Ltd.
Osaka-shi, Osaka 541-0041 (JP)

(72) Inventors:
• Haruna, Tetsuya
  Yokohama-shi, Kanagawa (JP)
• Hirano, Masaaki
  Yokohama-shi, Kanagawa (JP)
• Hikichi, Nobuhiro
  Yokohama-shi, Kanagawa (JP)

(74) Representative: Kreutzer, Ulrich et al
Cabinet Beau de Loménie
Bavariaring 26
80336 München (DE)

(54) **Optical fiber and method for manufacturing same**

(57)    Provided is an optical fiber having a large relative refractive index difference and a reduced transmission loss, as well as a manufacturing method therefor. An optical fiber preform (100), which is made of silica glass as the main element and which includes a core region having a relative refractive index difference of 2.0% or more and less than 3.0% on the basis of the refractive index of pure silica glass and a first cladding region provided around the core region and having a relative refractive index difference of -0.8% or more and less than -0.3% on the basis of the refractive index of pure silica glass, is drawn into a glass fiber. The glass fiber thus drawn is passed through an annealing furnace (21) installed below a drawing furnace (11), whereby the cooling rate of the glass fiber is restrained as compared with the case where it is cooled by air.

**FIG. 1**

**Description**

BACKGROUND OF THE INVENTION

Field of the Invention

The present invention relates to an optical fiber and a method of manufacturing an optical fiber.

Description of the Background Art

It is desired that optical fibers used for an optical transmission line have low transmission loss in order to achieve energy saving and cost reduction by reducing the number of parts used in equipment constituting an optical communications system. Thus, it has been attempted to reduce transmission loss of optical fibers by achieving high purity in materials used in their manufacture and various improvements in their manufacturing processes.

As for a single mode optical fiber that is most widely used at present, its transmission distance is limited by positive chromatic dispersion in a 1.55 $\mu$m band. In order to compensate the value of this chromatic dispersion, a dispersion compensating optical fiber having a negative chromatic dispersion value is used by way of being connected to a single mode optical fiber. In order to realize a negative chromatic dispersion value, the dispersion compensating optical fiber has a relative refractive index difference of 1.5% to 3.0% between the core region and the cladding region; such relative refractive index difference is larger than that of a general single mode optical fiber. Moreover, in addition to such a dispersion compensating optical fiber, optical fibers having a relative refractive index difference larger than 1.5% are used as optical fibers for parts, such as a highly nonlinear optical fiber used in an optical wavelength converter.

In order to manufacture an optical fiber in which the relative refractive index difference is large, $GeO_2$ which functions as a material for increasing the refractive index is added to $SiO_2$ that is used as a base material. However, adding impurities such as $GeO_2$ to pure silica glass causes density fluctuation in the glass such that the frequency of the fluctuation is smaller than the wavelength of light. As a result, Rayleigh scattering occurs during optical transmission through an optical fiber, which leads to an increase in the transmission loss. In particular, the transmission loss will increase when the amount of $GeO_2$ added to an optical fiber is increased in order to raise relative refractive index difference. International publication No. 2004-007383 describes how to reduce the transmission loss caused by Rayleigh scattering.

In recent years, the development of optical communication systems has progressed, increasing demand for optical fibers having a larger relative refractive index difference and reduced transmission loss. However, as mentioned above, the problem is that when the relative refractive index difference is increased, the transmission loss will also increase.

SUMMARY OF THE INVENTION

The object of the present invention is to provide an optical fiber having a larger relative refractive index difference and reduced transmission loss, and a method of manufacturing such optical fibers.

To achieve the object, an optical fiber manufacturing method of the present invention comprises: a step of setting a preform for an optical fiber to a drawing furnace, the preform being made of silica glass as the main element, including a core region in which the relative refractive index difference is 2.0% or more and less than 3.0% on the basis of the refractive index of pure silica glass, and including a first cladding region provided around the core region, the relative refractive index difference of the first cladding region being -0.8% or more and less than -0.3% on the basis of the refractive index of pure silica glass; a step of forming a glass fiber by melt-drawing the preform through a drawing furnace so that the drawing tension may be 100 g or more; a step of slow cooling (annealing) the glass fiber through an annealing furnace installed below the drawing furnace; and a step of forming a protective coating around the glass fiber after slow cooling.

Another aspect of the present invention is an optical fiber which comprises a glass fiber made of silica glass as the main element and a protective coating provided around the glass fiber and which includes a core region and a first cladding region provided around the core region, wherein the core region has a relative refractive index difference of 2.0% or more and less than 3.0% on the basis of the refractive index of pure silica glass, and the first cladding region has a relative refractive index difference of -0.8% or more and less than -0.3% on the basis of the refractive index of pure silica glass, and wherein the optical fiber is made by fiber drawing performed at a drawing tension of 100 g or more and by passing of the glass fiber through an annealing furnace after the fiber drawing.

According to the present invention, an optical fiber having a larger relative refractive index difference and reduced transmission loss, as well as a manufacturing method thereof, is provided.

BRIEF DESCRIPTION OF THE DRAWINGS

Figure 1 is a conceptional schematic diagram showing a drawing apparatus used in an optical fiber manufacturing method relating to an embodiment of the present invention.

Figure 2 is a conceptional schematic diagram showing an example of refractive index profile of an optical fiber relating to an embodiment of the present invention.

Figure 3 is a conceptional schematic diagram showing another example of refractive index profile of an optical fiber relating to an embodiment of the present invention.

Figure 4 is a graph showing relations between tension applied for drawing and transmission loss with respect to a plurality of double-clad optical fibers in which relative refractive index differences of their core regions are mutually different.

Figure 5 is a graph showing relations between tension applied for drawing and transmission loss with respect to a plurality of triple-clad optical fibers in which relative refractive index differences of their core regions are mutually different.

Figure 6 is a graph showing relations between tension applied for drawing and transmission loss with respect to a plurality of double-clad optical fibers in which relative refractive index differences of their core regions are mutually different.

Figure 7 is a graph showing relations between tension applied for drawing and transmission loss with respect to a plurality of triple-clad optical fibers in which relative refractive index differences of their core regions are mutually different.

Figure 8 is a graph showing relations between temperature of an annealing furnace and transmission loss with respect to a triple-clad optical fiber in which the relative refractive index difference of the core region is 2.2%.

Figure 9 is a graph showing relations between staying time of a fiber in an annealing furnace (i.e., time for a glass fiber to spend passing through the annealing furnace) and hydrogen-resistant characteristic at the wavelength of 1380 nm.

Figure 10 is a graph showing relations between staying time of a fiber in the annealing furnace and hydrogen-resistant characteristic at the wavelength of 1440 nm.

Figure 11 is a graph showing relations between transmission loss and glass diameter (diameter of glass part excluding the coating of an optical fiber).

DETAILED DESCRIPTION OF THE INVENTION

Hereinafter, preferred embodiments of the present invention will be described in reference to the accompanying drawings. The drawings are provided for the purpose of explaining the embodiments and are not intended to limit the scope of the invention. In the drawings, an identical mark represents the same element so that the repetition of explanation may be omitted. The dimensional ratios in the drawings are not always exact.

Drawing apparatus

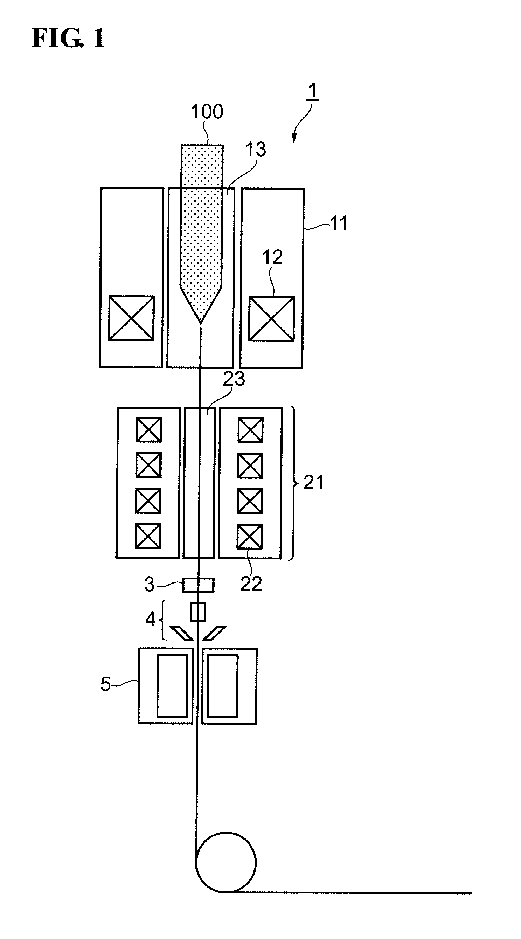

Figure 1 is a conceptional schematic diagram showing a drawing apparatus used in an optical fiber manufacturing method relating to an embodiment of the present invention. A drawing apparatus 1, which is equipment used for drawing a silica-based optical fiber preform into a fiber comprises: a drawing furnace 11, an annealing furnace 21, a diameter monitor 3, a coating device 4, and a curing device 5. The drawing furnace 11, the annealing furnace 21, the diameter monitor 3, the coating device 4, and the curing device 5 are installed in the drawing apparatus in the enumerated order in the direction (from top to bottom in Fig. 1) of drawing an optical fiber preform 100.

In the case of manufacturing an optical fiber using the drawing apparatus 1, a preform 100 which has a core region and a first cladding region provided around the core region is prepared, and the preform 100 which is held by a rise-and-fall device (not shown) is supplied to the drawing furnace 11. For manufacturing the below-mentioned double-clad optical fiber, a preform having a second cladding region around a first cladding region is used. Moreover, for manufacturing the below-mentioned triple-clad optical fiber, a preform which has an intermediate cladding region between the first cladding region and the second cladding region is used.

And the lower end of the preform 100 is heated to soften by a heater 12 provided in the drawing furnace 11, and a glass fiber is produced by drawing at a predetermined line speed. An inert gas is supplied into a furnace tube 13 in the drawing furnace 11, and the inside of the furnace tube 13 is inert gas atmosphere. As for this inert gas, $N_2$ gas can be used, for example.

Upon heat drawing, the glass fiber is exposed to the inert gas of about 1700°C, for example, within the furnace tube 13. The glass fiber which has passed through the inside of the furnace tube 13 is sent to the annealing furnace 21 installed below the drawing furnace 11. Then, the glass fiber is heated by the heater 22 in the annealing furnace 21. An inert gas is supplied to the furnace tube 23 of the annealing furnace 21, so that the inside of the furnace tube 23 is inert gas atmosphere. For example, $N_2$ gas is used as such inert gas, and also a gas having comparatively large molecular weight, such as air or Ar gas, can be used. As to the heating temperature and the heating time in the annealing furnace 21, description will be given later.

The glass fiber that has been slow cooled in the annealing furnace 21 is put out from the lower part of the furnace tube 23 to the outside of the annealing furnace 21, so that the glass fiber is cooled by the air. Then, the outer diameter of the glass fiber is measured by the diameter monitor 3. The value thus measured is used, for example, for the purpose of controlling the rotation of a drum on which the glass fiber is wound up.

Furthermore, the glass fiber whose diameter has been measured by the diameter monitor 3 is put into a coating apparatus. In many cases, the coating apparatus is usually equipped with two sets of coating device and curing device; however, Fig. 1 shows only a first set of coating device 4 and curing device 5. In the coating device 4, a UV resin is applied through a coating dice to the glass fiber which has passed through the diameter monitor 3. Next, in the curing device 5, the applied UV resin is hardened by ultraviolet light emitted from a UV lamp. Furthermore, upon passing through a second set of coating device and curing device (not illustrated), an optical fiber is wound up onto a drum through a guide roller.

Optical fiber

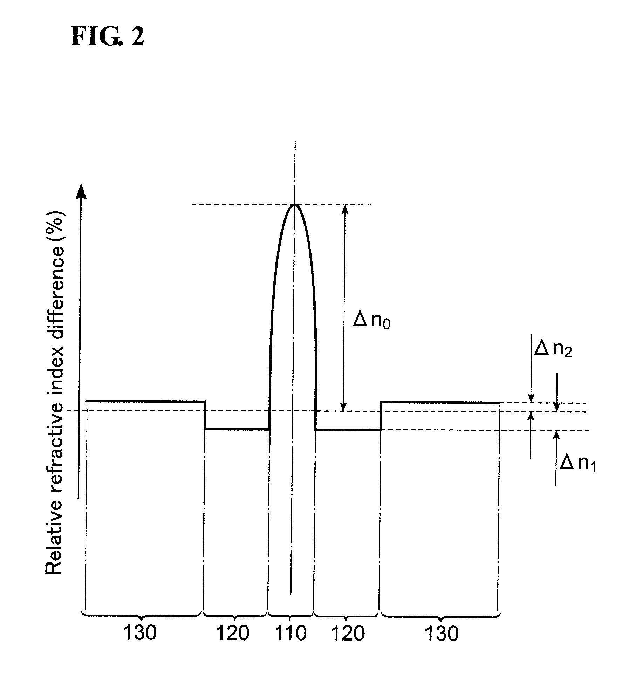

Next, an explanation will be given about an optical fiber manufactured using the drawing apparatus 1. Figure 2 is a conceptional schematic diagram showing an example of refractive index profile of an optical fiber (double clad) relating to an embodiment of the present invention. In Fig. 2, the abscissa shows diameters at a transverse section of an optical fiber and the ordinate shows relative refractive index differences, i.e.,

$$\frac{refractive\ index\ of\ each\ part - refractive\ index\ of\ pure\ silica\ glass}{refractive\ index\ of\ pure\ silica\ glass} \times 100\%,$$

.in terms of pure silica glass for each part of the optical fiber.

A double-clad optical fiber has a core region 110, a first cladding region 120 which is provided around the core region 110, and a second cladding region 130 which is provided around the first cladding region 120. The core region 110, the first cladding region 120, and the second cladding region 130 are made of $SiO_2$ to which $GeO_2$ or Fluorine is added at a predetermined amount, respectively. The diameter of the core region 110 is preferably in a range of 2.0 $\mu$m to 3.0 $\mu$m, and more preferably in a range of 2.3 $\mu$m to 2.7 $\mu$m. The outer diameter of the first cladding region 120 is preferably in a range of 8.0$\mu$m to 12.0 $\mu$m, and more preferably in a range of 9.0 $\mu$m to 11.0 $\mu$m. The outer diameter of the second cladding region 130 is preferably in a range of 80 $\mu$m to 120 $\mu$m, and more preferably in a range of 90 $\mu$m to 115 $\mu$m.

$GeO_2$ is added to the core region 110 so that the relative refractive index difference of the core region 110 may be 2.0% or more and less than 3.0%. The relative refractive index difference $\Delta n_0$ is preferably 2.0% or more and less than 2.5%, and more preferably 2.1% or more and less than 2.3%. In order to make the relative refractive index difference $\Delta n_0$ to be 2.0% or more and less than 3.0%, it is preferable to add $GeO_2$ to silica glass at a density of 8.5mol% to 11.5mol%. Also, in order to make the relative refractive index difference $\Delta n_0$ to be 2.1 % or more and less than 2.3%, $GeO_2$ is added to silica glass at a density of 9.1mol% to 10.6mol%.

Similarly, Fluorine is added to the first cladding region 120 so that the relative refractive index difference $\Delta n_1$ of the first cladding region 120 may be -0.8% or more and less than -0.3%. The relative refractive index difference $\Delta n_1$ is preferably -0.55% or more and less than -0.35%. In order to make the relative refractive index difference $\Delta n_1$ to be -0.8% or more and less than -0.3%, Fluorine is added to silica glass at a density of 2.8mol% to 6.5mol%. Also, in order to make the relative refractive index difference $\Delta n_1$ to be -0.55% or more and less than -0.35%, the density of Fluorine added to silica glass is preferably 3.4mol% to 5.5mol%.

$Cl_2$ is added to the second cladding region 130 so that the relative refractive index difference $\Delta n_2$ of the second cladding region 130 may be 0.03% or more and less than 0.09%. Preferably, the relative refractive index difference $\Delta n_2$ is 0.04% or more and less than 0.08%. In order to make the relative refractive index difference $\Delta n_2$ to be 0.03% or more and less than 0.09%, the density of $Cl_2$ added to silica glass is 0.30 mol% to 1.0 mol%. Also, in order to make the relative refractive index difference $\Delta n_2$ to be 0.04% or more and less than 0.08%, the density of $Cl_2$ added to silica glass is preferably 0.4mol% to 0.9mol%.

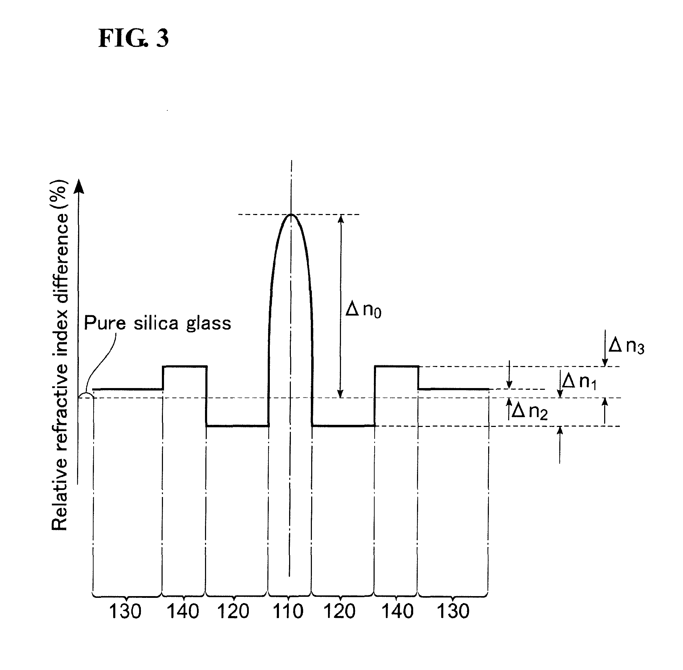

Figure 3 is a conceptional schematic diagram showing another example (triple clad) of the refractive index profile of an optical fiber according to an embodiment of the present invention. In Fig. 3, the abscissa shows diameters in a transverse section of the optical fiber, and the ordinate shows relative refractive index differences in each part of the optical fiber. The triple-clad optical fiber has a core region 110, a first cladding region 120 provided around the core region 110, a second cladding region 130 provided around the first cladding region 120, and an intermediate cladding region 140 provided between the first cladding region 120 and the second cladding region 130. The core region 110, the first cladding region 120, the intermediate cladding region 140, and the second cladding region 130 are made of $SiO_2$ to which $GeO_2$ or Fluorine is added at a predetermined amount, respectively.

The outer diameter of the core region 110 is preferably in a range of 2.0 $\mu$m to 3.0 $\mu$m, and more preferably in a range of 2.3 $\mu$m to 2.7 $\mu$m. The outer diameter of the first cladding region 120 is preferably in a range of 8.0 $\mu$m to 12.0 $\mu$m, and more preferably in a range of 9.0 $\mu$m to 11.0 $\mu$m. Also, the outer diameter of the intermediate cladding region 140 is preferably in a range of 11.0 $\mu$m to 18.0 $\mu$m, and more preferably in a range of 13.0 $\mu$m to 16.0 $\mu$m. The outer diameter of the second cladding region 130 is preferably in a range of 80 $\mu$m to 120 $\mu$m, and more preferably in a range of 90 $\mu$m to 115 $\mu$m.

Of regions constituting the triple-clad optical fiber, the relative refractive index differences of the core region 110, the first cladding region 120, and the second cladding region 130 are preferably the same as those of the above-mentioned double-clad optical fiber. $GeO_2$ is added to the intermediate cladding region 140 so that the relative refractive index difference $\Delta n_3$ of the intermediate cladding region 140 may be 0.2% or more and less than 0.5%. Preferably, the relative refractive index difference $\Delta n_3$ is 0.25% or more and less than 0.45%. In order to make the relative refractive index difference $\Delta n_3$ of the intermediate cladding region 140 to be 0.2% or more and less than 0.5%, the density of $GeO_2$ added to silica glass is 0.8mol% to 2.1mol%. Also, in order to make the relative refractive index difference $\Delta n_3$ to be 0.25% or more and less than 0.45%, it is preferable to add $GeO_2$ to silica glass at a density of 1.0mol% to 1.9mol%.

It is preferable that the triple-clad optical fiber have an effective cross-sectional area of 13 $\mu m^2$ or more and 19 $\mu m^2$ or less at the wavelength of 1550 nm and a cutoff wavelength of 1300 nm or more and 1700 nm or less, and a chromatic dispersion of -290 ps/nm/km or more and -150 ps/nm/km or less at the wavelength of 1550 nm.

Manufacturing conditions for an optical fiber

Next, an explanation will be given about an influence which the manufacturing conditions will have on the transmission loss when an optical fiber is produced using the drawing apparatus 1. More specifically, based on the results obtained by measuring the transmission loss of above-mentioned two kinds of optical fibers (double-clad, triple-clad) manufactured under various manufacturing conditions, the influence which manufacturing conditions have on the transmission loss will be explained.

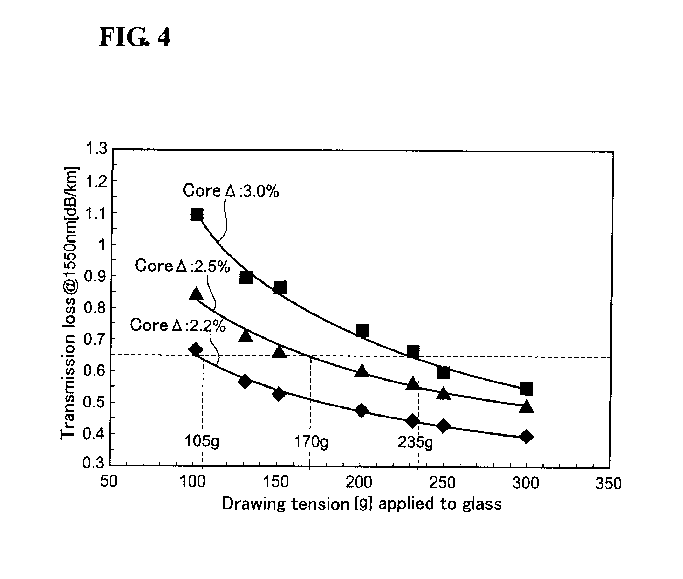

First, an explanation will be given as to how the transmission loss will be influenced by the passage or non-passage of a glass fiber through the annealing furnace 21 after drawing, as well as by the tension applied at the time of drawing. Table I shows the relations between tensions at the time of drawing and the transmission loss about a plurality of double-clad optical fibers in which the relative refractive index differences $\Delta n_0$ of core regions 110 differ from each other, and Fig. 4 is a graph produced based on Table I.

Table I

| Tension | Attenuation at 1550 nm (dB/km) | | |
| --- | --- | --- | --- |
| | $\Delta n_0$ 2.2% | $\Delta n_0$ 2.5% | $\Delta n_0$ 3.0% |
| 100 g | 0.62 | 0.85 | 1.10 |
| 130 g | 0.5'7 | 0.72 | 0.90 |
| 150 g | 0.53 | 0.67 | 0.87 |
| 200 g | 0.48 | 0.61 | 0.73 |
| 230 g | 0.45 | 0.57 | 0.67 |
| 250 g | 0.43 | 0.54 | 0.60 |
| 300 g | 0.40 | 0.50 | 0.55 |

Specifically, three kinds of optical fibers having different relative refractive index differences $\Delta n_0$ of the core region 110 ($\Delta n_0$ = 2.2%, 2.5%, 3.0%) were prepared. In these optical fibers, the relative refractive index difference $\Delta n_1$ of the first cladding region 120 was -0.50%, and the relative refractive index difference $\Delta n_2$ of the second cladding region 130 was 0.04%. The preform was drawn into fibers under seven conditions at tensions of 100 g, 130 g, 150 g, 200 g, 230 g, 250 g, and 300 g, changing the temperature of the drawing furnace. The glass fiber upon drawing was not passed through the inside of the annealing furnace 21, and after the glass fiber was air cooled as it was, it was processed into an optical fiber by applying a resin coating. The transmission loss was measured at a wavelength of 1550 nm.

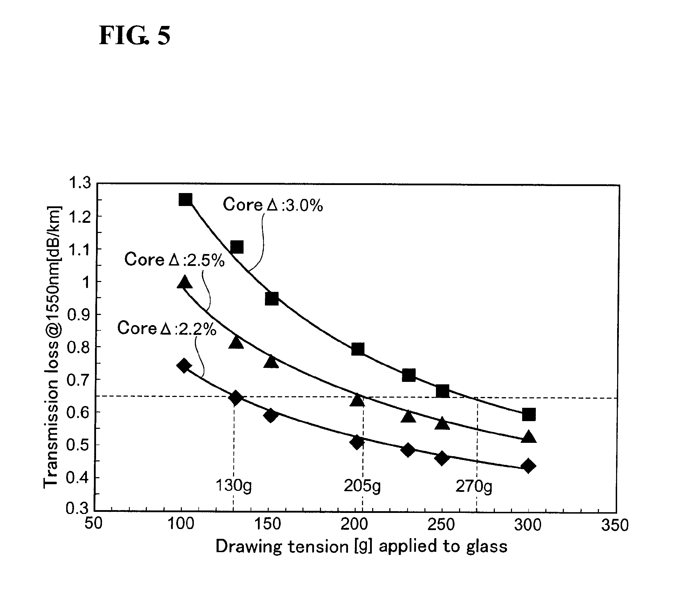

Table II shows relations between transmission loss and tensions at the time of drawing with respect to a plurality of triple-clad optical fibers in which the relative refractive index difference $\Delta n_0$ of the core region 110 differs from each other, and Fig. 5 is a graph produced on the basis of Table II.

Table II

| Tension | Attenuation at 1.55 nm (dB/km) | | |
|---|---|---|---|
| | $\Delta n_0$ 2.2% | $\Delta n_0$ 2.5% | $\Delta n_0$ 3.0% |
| 100 g | 0.75 | 1.00 | 1.25 |
| 130 g | 0.65 | 0.82 | 1.10 |
| 150 g | 0.60 | 0.76 | 0.95 |
| 200 g | 0.52 | 0.62 | 0.80 |
| 230 g | 0.50 | 0.60 | 0.72 |
| 250 g | 0.47 | 0.58 | 0.67 |
| 300 g | 0.45 | 0.54 | 0.60 |

Specifically, three kinds of optical fibers having different relative refractive index differences $\Delta n_0$ of the core region 110 ($\Delta n_0$ = 2.2%, 2.5%, 3.0%) were prepared. In these optical fibers, the relative refractive index difference $\Delta n_1$ of the first cladding region 120 was -0.50%, and the relative refractive index difference $\Delta n_2$ of the second cladding region 130 was 0.04%, while the relative refractive index difference $\Delta n_3$ of the intermediate cladding region 140 was 0.30%. The preform was drawn into fibers under seven conditions at tensions of 100 g, 130 g, 150 g, 200 g, 230 g, 250 g, and 300 g, changing the temperature of the drawing furnace. The glass fiber upon drawing was not passed through the inside of the annealing furnace 21, and after the glass fiber was air cooled as it was, it was processed into an optical fiber by applying a resin coating. The transmission loss was measured at a wavelength of 1550 nm.

As shown in Fig. 4 and Fig. 5, the transmission loss of the manufactured optical fiber can be reduced by increasing the tension at the time of drawing a preform into a fiber. Presumably, this is because as a result of the temperature of the drawing furnace 11 being lowered so as to perform drawing at a high tension, the Rayleigh scattering that is caused by disorders in the bond of atoms in the glass fiber is decreased.

For example, as shown in Fig. 5, in the case of a triple-clad optical fiber having the relative refractive index difference $\Delta n_0$ of 2.5%, in order to decrease the transmission loss to 0.65 dB/km or less at the wavelength of 1550 nm, the tension must be 205 g or more. Also, in the case of an optical fiber having the relative refractive index difference $\Delta n_0$ of 2.2%, in order to decrease the transmission loss to 0.65 dB/km or less at the wavelength of 1550 nm, the tension must be about 130 g or more, and further to make the transmission loss to be 0.60 dB/km or less, the tension must be about 150 g or more, whereas in order to decrease the transmission loss to 0.5 dB/km or less, the tension must be about 230 g or more. Thus, if the transmission loss is to be reduced only by adjusting the tension at the time of drawing, it is necessary to increase the tension as mentioned above. And, if the tension is increased too much, it might result in increase in the possibility of the optical fiber being broken due to a minute crack on the surface of the fiber.

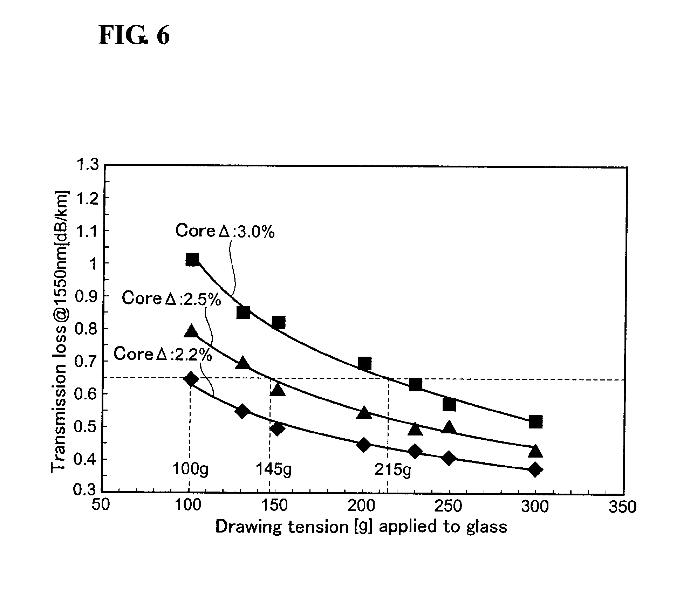

Next, shown are the results in the case of the above-mentioned optical fibers (double-clad, triple-clad) being manufactured such that glass fibers were passed through the annealing furnace 21 upon drawing. Table III shows relations between transmission loss and tensions at the time of drawing with respect to a plurality of double-clad optical fibers in which the relative refractive index difference $\Delta n_0$ of the core region 110 differs from each other, and Fig. 6 is a graph produced on the basis of Table III. The optical fibers used in the measurement shown in Table III and Fig. 6 have the same relative refractive indexes as the double clad optical fibers used in the measurement shown in Table I and Fig. 4. However, the optical fibers were manufactured such that the glass fibers were passed through the inside of the annealing furnace 21 upon drawing. The temperature of the annealing furnace 21 was 1450°C, and the time during which a glass fiber passed through the inside of the annealing furnace 21 was 1.2 seconds. The transmission loss was measured at the wavelength of 1550 nm.

Table III

| Tension | Attenuation at 1550 nm (dB/km) | | |
|---|---|---|---|
| | $\Delta n_0$ 2.2% | $\Delta n_0$ 2.5% | $\Delta n_0$ 3.0% |
| 100 g | 0.65 | 0.80 | 1.01 |
| 130 g | 0.55 | 0.70 | 0.85 |
| 150 g | 0.50 | 0.62 | 0.82 |
| 200 g | 0.45 | 0.55 | 0.70 |

(continued)

| Tension | Attenuation at 1550 nm (dB/km) | | |
|---------|---------|---------|---------|
| | $\Delta n_0$ 2.2% | $\Delta n_0$ 2.5% | $\Delta n_0$ 3.0% |
| 230 g | 0.43 | 0.50 | 0.63 |
| 250 g | 0.41 | 0.51 | 0.57 |
| 300 g | 0.38 | 0.44 | 0.52 |

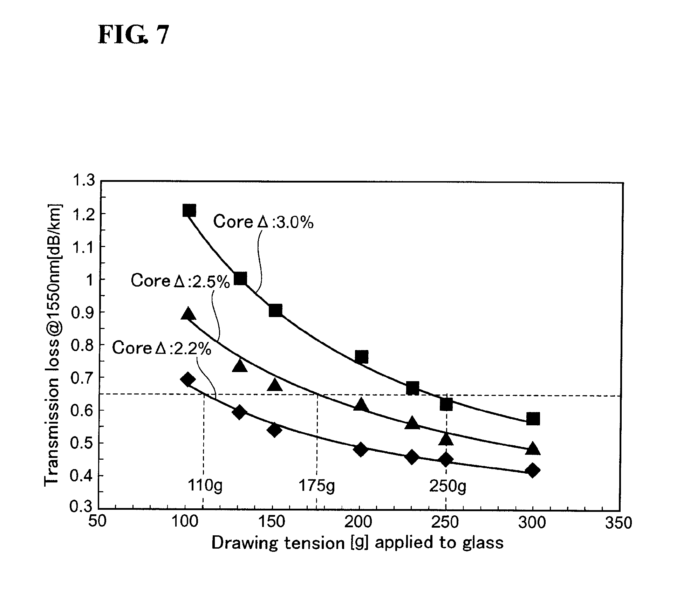

Table IV shows relations between transmission loss and tensions applied at the time of drawing with respect to a plurality of triple-clad optical fibers in which the relative refractive index differences $\Delta n_0$ of the core region 110 were different, and Fig. 7 is a graph produced on the basis of Table IV The optical fibers used in the measurement shown in Table IV and Fig. 7 had the same relative refractive indexes as the tripple-clad optical fibers used in the measurement shown in Table II and Fig. 5. However, the optical fibers were manufactured such that the glass fibers were passed through the inside of the annealing furnace 21 upon drawing. The temperature of the annealing furnace 21 was 1450°C, and the time during which a glass fiber passed through the inside of the annealing furnace 21 was 1.2 seconds. The transmission loss was measured at the wavelength of 1550 nm (1.55 $\mu$m).

Table IV

| Tension | Attenuation at 1550 nm (dB/km) | | |
|---------|---------|---------|---------|
| | $\Delta n_0$ 2.2% | $\Delta n_0$ 2.5% | $\Delta n_0$ 3.0% |
| 100 g | 0.70 | 0.90 | 1.20 |
| 130 g | 0.60 | 0.75 | 1.00 |
| 150 g | 0.55 | 0.69 | 0.90 |
| 200 g | 0.49 | 0.63 | 0.77 |
| 230 g | 0.47 | 0.57 | 0.67 |
| 250 g | 0.46 | 0.53 | 0.62 |
| 300 g | 0.43 | 0.50 | 0.58 |

A glass fiber drawn in the drawing apparatus 1 is passed through the annealing furnace 21 installed below the drawing furnace 11, and thereby the cooling rate of glass whose temperature has become high in the drawing furnace 11 can be lessened (slow cooling). This will reduce the disorders in the bond of atoms in the glass, and thereby the Rayleigh scattering can be restrained, decreasing the transmission loss of an optical fiber thus produced. That can be confirmed from comparison between Fig. 4 and Fig. 6, as well as comparison between Fig. 5 and Fig. 7. Specifically, with respect to a triple-clad optical fiber having relative refractive index difference $\Delta n_0$ of 2.2%, it was possible to decrease the tension required at the time of drawing a glass fiber so as to lessen the transmission loss at the wavelength of 1550 $\mu$m to 0.65 dB/km or less: that is, the tension was reduced to about 110 g by passing through the annealing furnace 21, while the tension applied to a glass fiber in the case of non-use of the annealing furnace was as much as about 130 g or more. Thus, the reduction of transmission loss can also be attained by passing a glass fiber through the annealing furnace 21 upon drawing.

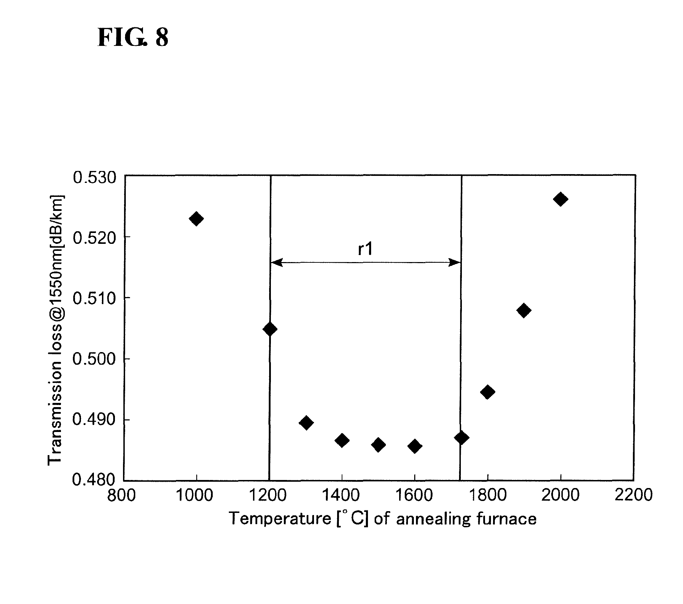

Table V shows relations between temperatures of the annealing furnace and transmission loss of triple-clad optical fibers in which the relative refractive index difference of the core region is 2.2%, and Fig. 8 is a graph produced on the basis of Table V.

Table V

| Temperature in annealing furnace (°C) | Attenuation at 1550 nm (dB/km) |
|---------|---------|
| 1000 | 0.523 |
| 1200 | 0.505 |
| 1300 | 0.490 |
| 1400 | 0.487 |
| 1500 | 0.486 |
| 1600 | 0.486 |
| 1730 | 0.487 |
| 1800 | 0.495 |

(continued)

| Temperature in annealing furnace (°C) | Attenuation at 1550 nm (dB/km) |
|---|---|
| 1900 | 0.508 |
| 2000 | 0.526 |

In this case, of the triple-clad optical fibers used in the measurement shown in Table IV and Fig. 7, the transmission loss of the optical fibers was measured with respect to the optical fibers in which the relative refractive index difference $\Delta n_0$ of the core region 110 was 2.2% and which were manufactured under different temperatures of the annealing furnace.

As shown in Fig. 8, it was confirmed that the transmission loss can be reduced by adjusting the temperature in the annealing furnace 21 in a range that is 1200°C or more and less than 1730°C (range shown by r1). When the temperature in the annealing furnace 21 is 1200°C or less, the reduction of transmission loss becomes smaller since the structural relaxation of glass does not progress. In contrast, when the temperature in the annealing furnace 21 is 1730°C or more, the glass of the core region will be re-melt in the annealing furnace 21. This will cause failure in the transmission loss reduction, since the density fluctuation of glass remains when the glass fiber put out from the inside of the annealing furnace 21 is cooled rapidly by the outside air. Therefore, it is preferable that the temperature in the annealing furnace 21 be 1200°C or more and less than 1730°C.

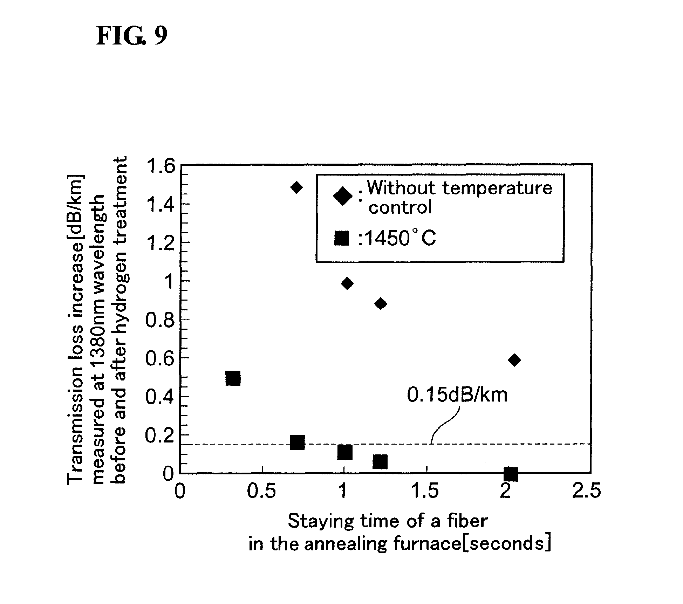

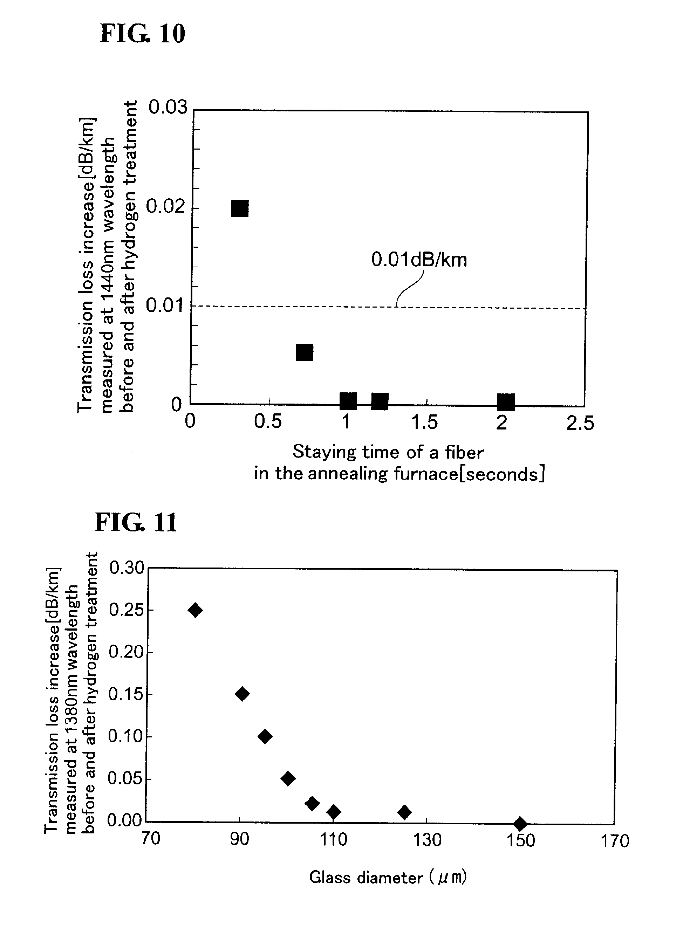

It was also confirmed that hydrogen-resistant characteristics, which indicate long-term reliability of optical fibers, are remarkably improved by installing the annealing furnace 21 below the drawing furnace 11 and causing glass fibers upon drawing to take a predetermined time for passing through the inside of the annealing furnace 21. Figure 9 is a graph showing relations between time for a glass fiber to pass through the annealing furnace 21 and hydrogen-resistant characteristic (increase in transmission loss at the wavelength of 1380 nm) with respect to a case where no temperature control was done in the annealing furnace 21 and a case where the temperature was set to 1450°C. Figure 10 is a graph showing relations between time for a glass fiber to pass through the annealing furnace 21 and hydrogen-resistant characteristic (increase in the transmission loss at the wavelength of 1440 nm) in the case where the temperature in the annealing furnace was set to 1450°C.

In this case, of the triple-clad optical fibers used in the measurement shown in Table IV, the temperature of the annealing furnace 21 and the time during which a glass fiber passed through the annealing furnace 21 were varied for the manufacture of the optical fibers having the relative refractive index difference $\Delta n_0$ of 2.2%. The hydrogen-resistant characteristics were evaluated by changes in the transmission loss of the optical fibers as measured before and after the optical fibers upon manufacture were left for 20 hours at a temperature of 80°C under an environment of 100% hydrogen density, whereas the transmission losses were measured at a wavelength of 1380 nm or 1440 nm. It should be noted that the increase in the transmission loss at the wavelength of 1440 nm is due to defects in the structure of glass.

As shown in Fig. 9, in order to make the increase in transmission loss at the wavelength of 1380 nm to be 0.15 dB/m or less in the case where an optical fiber is left under the hydrogen environment, it is necessary to apply a heating process by installing the annealing furnace 21. This was confirmed from the fact that the increase in transmission loss when the optical fiber was left under the hydrogen environment was 0.1 dB/m or more in the case where the temperature control in the annealing furnace 21 was not performed (i.e., when there was no heating in the annealing furnace 21). Also, as shown in Fig. 10, it was confirmed that when an optical fiber is left under the hydrogen environment, the increase of transmission loss at the wavelength of 1440 nm can be made less than 0.01dB/m if the time during which the glass fiber passes through the annealing furnace 21 is set to 0.7 seconds or more.

Figure 11 is a graph showing relations between transmission loss and glass diameter (i.e., diameter of glass part including the core region and the cladding region). Specifically, of the triple-clad optical fibers used in the measurement shown in Table IV, increases in transmission loss of the optical fibers having the relative refractive index difference $\Delta n_0$ of 2.2% and different glass diameters were evaluated at the wavelength of 1380nm under the hydrogen environment.

As shown in Fig. 11, the larger the glass diameter of an optical fiber, the more reduced the increase of transmission loss was. Conceivably, this is because the larger the glass diameter, the slower the cooling rate of the glass of the core region of a glass fiber discharged from the drawing furnace 11 upon drawing. When the cooling rate of glass becomes slower, the loss of Rayleigh scattering becomes smaller. Consequently, the transmission loss is reduced. However, in the case of modular applications such as use of a dispersion compensating fiber (DCF), a module will become inevitably larger as a whole if the glass diameter is enlarged. Therefore, a practically suitable glass diameter is 150 $\mu$m or less. Conversely, if the glass diameter becomes smaller than 90 $\mu$m, the transmission loss will increase since the cooling speed of glass of the core region of the glass fiber discharged from the drawing furnace 11 upon drawing will become faster, and moreover the micro-bend loss will also increase because of thin glass.

As described above, according to the optical fiber manufacturing method of this embodiment, since a glass fiber passes through the annealing furnace 21 installed under the drawing furnace 11, the cooling rate of the glass fiber is restrained as compared with the case where the glass fiber is air cooled. As a result, the disorders in the bond of atoms in the glass are reduced, and the Rayleigh scattering can be controlled, whereby the transmission loss of the optical fiber can be decreased even in the case where the relative refractive index difference is increased. It should be noted that the present invention is not limited to the above-mentioned modes, and various modifications are possible. For example, the optical fiber manufacturing method of the present invention is also applicable to a so-called single-clad optical fiber.

**Claims**

1. A method of manufacturing an optical fiber, comprising:

   a step of setting a preform for an optical fiber to a drawing furnace, the preform being made of silica glass as the main element, including a core region having a relative refractive index difference of 2.0% or more and less than 3.0% on the basis of the refractive index of pure silica glass and including a first cladding region provided around the core region, the relative refractive index difference of the first cladding region being -0.8% or more and less than -0.3% on the basis of the refractive index of pure silica glass;
   a step of forming a glass fiber by melt-drawing the preform through a drawing furnace (11) so that the fiber drawing tension may be 100 g or more;
   a step of slow cooling the glass fiber through an annealing furnace (21) installed below the drawing furnace (11); and
   a step of forming a protective coating around the glass fiber after slow cooling.

2. An optical fiber manufacturing method according to claim 1, wherein
   the temperature of the annealing furnace (21) is 1200°C or more and less than 1730°C and
   the time for the glass fiber to pass through the annealing furnace (21) is 0.7 seconds or more.

3. An optical fiber comprising a glass fiber made of silica glass as the main element and a protective coating provided around the glass fiber, the glass fiber including a core region (110) and a first cladding region (120) provided around the core region, wherein
   the core region (110) has a relative refractive index difference of 2.0% or more and less than 3.0% on the basis of the refractive index of pure silica glass, and the first cladding region (120) has a relative refractive index difference of -0.8% or more and less than -0.3% on the basis of the refractive index of pure silica glass, and wherein
   the optical fiber is made by fiber drawing performed at a drawing tension of 100 g or more and by passing of the glass fiber through an annealing furnace (21) after the fiber drawing.

4. An optical fiber according to claim 3, wherein
   the temperature of the annealing furnace (21) is 1200°C or more and less than 1730°C and
   the time for the glass fiber to pass through the annealing furnace is 0.7 seconds or more.

5. An optical fiber according to claim 3, wherein
   the increase in transmission loss is 0.15 dB/m or less at the wavelength of 1380 nm and 0.01 dB/m or less at the wavelength of 1440 nm in the case where the optical fiber is left for 20 hours under an environment of 80°C and 100% hydrogen density.

6. An optical fiber according to claim 3, wherein
   the optical fiber has a second cladding region (130) provided around the first cladding region (120), the relative refractive index difference of the second cladding region (130) being 0.03% or more and less than 0.09% on the basis of the refractive index of pure silica glass.

7. An optical fiber according to claim 6, wherein
   the optical fiber has an intermediate cladding region (140) between the first cladding region (120) and the second cladding region (130), the intermediate cladding region (140) having a refractive index of 0.2% or more and less than 0.5% on the basis of the refractive index of pure silica glass, and wherein
   the effective cross-sectional area is 13 $\mu m^2$ or more and 19 $\mu m^2$ or less at the wavelength of 1550 nm, the cutoff wavelength is 1300 nm or more and 1700 nm or less, and the chromatic dispersion is -290 ps/nm/km or more and -150 ps/nm/km or less at the wavelength of 1550 nm.

## FIG. 1

# FIG. 2

**FIG. 3**

# FIG. 4

# FIG. 5

# FIG. 6

# FIG. 7

FIG. 8

## FIG. 9

## FIG. 10

## FIG. 11

Europäisches
Patentamt

European
Patent Office

Office européen
des brevets

# EUROPEAN SEARCH REPORT

Application Number

EP 11 17 3703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 698 582 A2 (SUMITOMO ELECTRIC INDUSTRIES [JP]) 28 February 1996 (1996-02-28) | 3-5 | INV. C03B37/027 G02B6/036 |
| Y | * page 5, lines 1-4, 15-19,38-41 * * page 7, lines 1-6 * * tables 1-3 * * figures 1A,1E * * claims 1,2,4,5 * | 1,2 | |
| X | EP 1 170 604 A2 (SUMITOMO ELECTRIC INDUSTRIES [JP]) 9 January 2002 (2002-01-09) * paragraphs [0019], [0029], [0030]; claims 1-3,5,7-9,11; figure 3 * | 3-7 | |
| X | EP 1 496 023 A1 (SUMITOMO ELECTRIC INDUSTRIES [JP]) 12 January 2005 (2005-01-12) | 3-7 | |
| Y | * paragraphs [0051], [0052], [0195]; claims 1,2,9,10,11; figure 2 * | 1,2 | |
| X | JP 9 127354 A (SUMITOMO ELECTRIC INDUSTRIES) 16 May 1997 (1997-05-16) | 3-6 | TECHNICAL FIELDS SEARCHED (IPC) C03B G02B |
| Y | * paragraphs [0050], [0059]; claims 1-3,9; figures 13,16 * | 1,2 | |
| Y | K. SAITO ET AL: "Control of Glass-Forming Process During Fiber-Drawing to Reduce the Rayleigh Scattering Loss", JOURNAL OF THE AMERICAN CERAMIC SOCIETY, vol. 89, no. 1, 1 January 2006 (2006-01-01), pages 65-69, XP55013115, ISSN: 0002-7820, DOI: 10.1111/j.1551-2916.2005.00726.x * page 68, column 1, paragraph 1; figure 7 * | 1,2 | |

The present search report has been drawn up for all claims

| Place of search | Date of completion of the search | Examiner |
|---|---|---|
| Munich | 25 November 2011 | Martinek, K |

EPO FORM 1503 03.82 (P04C01)

## ANNEX TO THE EUROPEAN SEARCH REPORT
### ON EUROPEAN PATENT APPLICATION NO.

EP 11 17 3703

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2011

| Patent document cited in search report | | Publication date | Patent family member(s) | | Publication date |
|---|---|---|---|---|---|
| EP 0698582 | A2 | 28-02-1996 | DE 69513344 D1 | | 23-12-1999 |
| | | | DE 69513344 T2 | | 20-04-2000 |
| | | | EP 0698582 A2 | | 28-02-1996 |
| | | | JP 3491644 B2 | | 26-01-2004 |
| | | | JP 8059278 A | | 05-03-1996 |
| | | | US 5581647 A | | 03-12-1996 |
| EP 1170604 | A2 | 09-01-2002 | AU 783168 B2 | | 29-09-2005 |
| | | | AU 5181901 A | | 03-01-2002 |
| | | | CN 1330276 A | | 09-01-2002 |
| | | | EP 1170604 A2 | | 09-01-2002 |
| | | | US 2002001444 A1 | | 03-01-2002 |
| EP 1496023 | A1 | 12-01-2005 | AU 2003235180 A1 | | 27-10-2003 |
| | | | CA 2482626 A1 | | 23-10-2003 |
| | | | CN 1646438 A | | 27-07-2005 |
| | | | CN 101239778 A | | 13-08-2008 |
| | | | EP 1496023 A1 | | 12-01-2005 |
| | | | JP 4404196 B2 | | 27-01-2010 |
| | | | US 2004247269 A1 | | 09-12-2004 |
| | | | WO 03086997 A1 | | 23-10-2003 |
| JP 9127354 | A | 16-05-1997 | JP 3068013 B2 | | 24-07-2000 |
| | | | JP 9127354 A | | 16-05-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2004007383 A